(19) Europäisches Patentamt
European Patent Office
Office européen des brevets

(11) Veröffentlichungsnummer: **0 201 795 B1**

# (12) EUROPÄISCHE PATENTSCHRIFT

(45) Veröffentlichungstag der Patentschrift: **07.06.89**

(51) Int. Cl.[4]: **C 08 L 69/00**, C 08 K 5/52, C 08 K 5/53 // (C08L69/00, 25:12, 27:18, 51:00)

(21) Anmeldenummer: **86105859.2**

(22) Anmeldetag: **28.04.86**

## (54) Flammwidrige, schlagzähe Polycarbonat-Formmassen.

(30) Priorität: **10.05.85 DE 3516807**

(43) Veröffentlichungstag der Anmeldung: **20.11.86 Patentblatt 86/47**

(45) Bekanntmachung des Hinweises auf die Patenterteilung: **07.06.89 Patentblatt 89/23**

(84) Benannte Vertragsstaaten: **DE FR GB IT NL**

(56) Entgegenhaltungen:
**EP-A- 0 080 767**
**EP-A- 0 103 230**
**EP-A- 0 131 751**
**EP-A- 0 174 493**
**FR-A- 2 234 348**
**FR-A- 2 239 512**
**CHEMICAL ABSTRACTS, Band 90, Nr. 18, April 1979, Seite 36, Zusammenfassung Nr. 138688v, Columbus, Ohio, US; & JP - A - 79 06 052 (TEIJIN LTD.) 17-01-1979**
**Kunststofflexikon 1981, p. 189**
**Kirk-Othmer, Encyclopedia of Polymer Sc. and Techn., 7, 21, (1980)**
**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Kress, Hans-Jürgen, Dr.**
**Scheiblerstrasse 111**
**D-4150 Krefeld (DE)**
Erfinder: **Müller, Friedemann, Dr.**
**Am Steinacker 5**
**D-4040 Neuss 21 (DE)**
Erfinder: **Lindner, Christian, Dr.**
**Riehlerstrasse 200**
**D-5000 Köln 60 (DE)**
Erfinder: **Peters, Horst, Dr.**
**Winterberg 25**
**D-5090 Leverkusen 3 (DE)**
Erfinder: **Buekers, Josef**
**Kneinstrasse 58a**
**D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind schlagzähe, flammwidrige thermoplastische Polycarbonatformmassen, bestehend aus

A. 50 bis 90 Gew.-% eines halogenhaltigen Copolycarbonats aus einem zweiwertigen Phenol und einem zweiwertigen halogenierten, vorzugsweise bromierten Phenol, wobei das Copolycarbonat 3 bis 20 Gew.-% Halogen, insbesondere Brom, in Form von einkondensierten, halogenierten zweiwertigen Phenolen enthält,

B. 10 bis 50 Gew.-% eines thermoplastischen Polymerisats aus 50 bis 95 Gew.-Teilen Styrol, α-Methylstyrol, kernsubstituiertem Styrol oder Mischungen daraus und 5 bis 50 Gew.-% (Meth)Acrylnitril,

C. 1 bis 20 Gew.-Teilen, vorzugsweise 5 bis 15 Gew.-Teilen, bezogen auf 100 Gew.-Teile Gesamtgewicht aus A. und B., einer Phosphorverbindung der Formel (I),

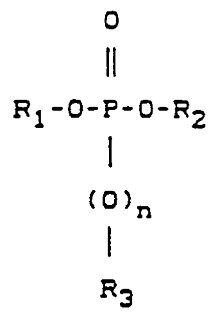

(I)

worin

$R_1$, $R_2$ und $R_3$ unabhängig voneinander ein gegebenenfalls halogensubstituiertes $C_1$-$C_8$-Alkyl oder ein gegebenenfalls alkyl- oder halogensubstituiertes $C_6$-$C_{20}$-Aryl sind und « n » für 0 oder 1 steht und

D. 0,05 bis 2,0 Gew.-Teilen, insbesondere 0,1 bis 1,0 Gew.-Teilen, bezogen auf 100 Gew.-Teile Gesamtgewicht aus A. und B., eines Tetrafluorethylenpolymerisats mit mittleren Teilchengrößen von 0,05 bis 20 μm, mit Fluorgehalten von 65-76 Gew.% und einer Dichte von 1,2 bis 1,9 g/cm$^3$, wobei die Komponente D. in Form einer koagulierten Mischung von Emulsionen der Tetrafluorethylenpolymerisate D. mit Emulsionen von maximal 3 Gew.-Teilen, mindestens jedoch 0,1 Gew.-Teilen, bezogen auf 100 Gew.-Teile der Summe der Komponenten A. + B., von Pfropfpolymerisaten E aus

E.1 5 bis 90 Gew.-Teilen, vorzugsweise 30 bis 80 Gew.-Teilen einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile, vorzugsweise 70 bis 20 Gew.-Teile, eines Kautschuks mit einer Glastemperatur $T_G \leqslant 10$ °C

eingesetzt wird, und wobei das Gewichtsverhältnis Pfropfpolymerisat E. zum Tetrafluorethylenpolymerisat D. zwischen 95 : 5 und 60 : 40 liegt, sowie gegebenenfalls wirksamen Mengen an Stabilisatoren, Pigmenten, Fließmitteln, Entformungsmitteln und/oder Antistatika.

Gemäß der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können. Der alleinige Zusatz von 10 Gew.-Tl. Triphenylphosphat zu Bisphenol A-Polycarbonat hat allerdings keine Antitropfwirkung gemäß Entflammungstest U. L. Subj. 94 (siehe Seite 20 der DE-OS 2 228 072).

GB-PS 1 459 648 beschreibt flammwidrige, nichttropfende Polymere, beispielsweise aus ABS-Polymeren oder aus Polycarbonaten, denen ein Flammschutzadditiv, wie beispielsweise Triphenylphosphat oder eine Halogenverbindung oder Mischung derartiger Additive, ein nicht-brennbares Fasermaterial und Polytetrafluorethylenharz zugemischt worden sind. Das Beispiel 2 der GB-PS 1 459 648 zeigt, daß

Polytetrafluorethylenharz ohne Faserzusatz nicht das Tropfen verhindert.

Aus der DE-OS 2 434 085 sind verschäumbare thermoplastische Kunststoffe bekannt, wobei als Thermoplasten unter anderem Polycarbonate, Polymerisate oder Mischungen davon genannt sind. Als Polymerisate sind auch solche aus Butadien, Styrol und Acrylnitril oder aus Styrol allein genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Gemäß DE-OS 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, die gemäß der auf Seite 9 der DE-OS 2 921 325 zitierten US-Patentschrift 3 392 136 auch Polyvinylidenfluoride sein können. Den Polycarbonaten können ABS-Copolymerisate zugemischt sein.

Aus US-PS 4 355 126 und 4 107 232 sind unter anderem flammwidrige ABS-Polymerisate bekannt, die Polytetrafluorethylene enthalten. Als Flammschutzmittel sind Halogenverbindungen und Triarylphosphate geeignet. Bevorzugt sind aromatische Halogenverbindungen wie chlorhaltige aromatische Polycarbonate. Triphenylphosphat ist besonders bevorzugt, welches auch in Kombination mit Hexabrombenzol eingesetzt werden kann.

Aus den DE-OS 2 903 100 und 2 918 883 sind flammwidrige Mischungen aus Polycarbonaten, ABS-Polymerisaten und Halogenverbindungen bekannt. Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali- oder Erdalkalisalze von Säuren in Kombination mit Antitropfmitteln wie Polytetrafluorethylenen erreicht, wobei die ABS-Polymerisate nur maximal 10 Gew.-%, bezogen auf Gesamtmischung betragen.

Bekannt sind auch flammwidrige Polymermischungen, die neben Polytetrafluorethylenen und organischen Halogenverbindungen Polyphosphate mit Molekulargewichten von 1 600 bis 150.000 in Mengen von 1 bis 35 Gew.-% enthalten (EP-A 0 103 230). Die Polycarbonate dieser Formmassen sind jedoch überwiegend aus tetramethylierten Diphenolen aufgebaut.

Aus der DE-OS 3 322 260 (= EP-A-131 751) sind flammwidrige thermoplastische Formmassen bekannt, die (a) aromatische Polycarbonate, (b) SAN-Pfropfpolymerisate, (c) thermoplastische Polymerisate, (d) gegebenenfalls Halogenverbindungen, (e) Antimontrioxid, Antimoncarbonat, Wismuttrioxid oder Wismutcarbonat und (f) feinteiliges Tetrafluorethylenpolymerisat enthalten, wobei dieses über eine wäßrige Emulsion der SAN-Pfropfpolymerisate (b) und gegebenenfalls eine wäßrige Emulsion des thermoplastischen Polymerisats (c) in die Formmasse eingebracht wird, wodurch gute Oberflächen der Formmassen erzielt werden. Gemäß Seite 16 dieser DE-OS läßt sich dieses Prinzip der Einarbeitung von Tetrafluorethylenpolymerisaten auf alle Polycarbonat-haltigen Formmassen übertragen.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren sei noch auf US-Patent 3 294 871 hingewiesen, sowie auf US-PS 3 005 795, insbesondere Spalten 3/4, wo Fällung und Koagulation erwähnt sind.

Bekannt sind beispielsweise aus JA-49-02343 flammwidrige Thermoplastmischungen aus 80 Teilen eines Acrylnitril/Styrol-Copolymerisats und 20 Teilen eines Tetrabrombisphenols-A-Polycarbonats.

Die erfindungsgemäßen Formmassen zeichnen sich durch Schlagzähigkeit und gute Flammwidrigkeit aus.

Erfindungsgemäß geeignete, thermoplastische, aromatische Copolycarbonate gemäß Komponente A. sind solche auf Basis der Diphenole der Formel (II)

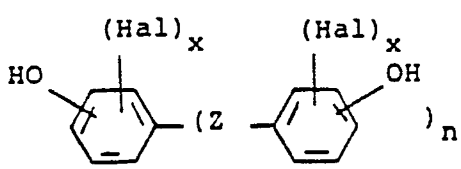

(II)

worin Z eine Einfachbindung, $C_1$-$C_5$-Alkylen, ein $C_2$-$C_5$-Alkyliden, ein $C_5$-$C_6$-Cycloalkyliden, —S— oder —$SO_2$—Hal, Chlor oder Brom, x 0, 1 oder 2 und « n » 1 oder 0 sind, wobei die Copolycarbonate gemäß Komponente A. 3-20 Gew.-% Halogen, insbesondere Brom, in Form von einkondensierten halogenierten Diphenolen enthalten.

Geeignete Diphenole der Formel II sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-3,5-dibrom-4-hydroxyphenyl)-propan.

Bevorzugte Diphenole der Formel II sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Die Herstellung der erfindungsgemäß geeigneten Polycarbonate gemäß Komponente A. ist literaturbekannt und kann beispielsweise mit Phosgen nach dem Phasengrenzflächenverfahren oder mit

Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern, wie etwa Phenol erzielt wird.

Die erfindungsgemäß geeigneten Polycarbonate gemäß Komponente A. haben mittlere Gewichtsmittelmolekulargewichte ($\bar{M}w$, gemessen beispielsweise durch Ultrazentrifugation oder durch Streulichtmessung) von 10 000 bis 200 000, vorzugsweise von 20 000 bis 80 000.

Die erfindungsgemäß geeigneten Polycarbonate gemäß Komponente A. können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Copolycarbonate sind Copolycarbonate auf Basis von Bisphenol A mit bis zu 15 Gew.-%, bezogen auf die Summe der Diphenole, an Bis-(3,5-dibrom-4-hydroxyphenyl)-propan.

Die erfindungsgemäßen thermoplastischen Polymerisate gemäß Komponente B. sind Polymerisate aus 50-95 Gew.-% Styrol, α-Methylstyrol, kernsubstituiertem Styrol oder Mischungen daraus und 5-50 Gew.-% (Meth)Acrylnitril.

Die Polymerisate gemäß Komponente B. sind harzartig, thermoplastisch und kautschukfrei. Besonders bevorzugte Polymerisate B. sind solche aus Styrol und/oder α-Methylstyrol mit Acrylnitril.

Besonders bevorzugte Gewichtsverhältnisse im thermoplastischen Polymerisat B. sind 60-80 Gew.-% Styrol und/oder α-Methylstyrol und 40-20 Gew.-% Acrylnitril.

Die Polymerisate gemäß Komponente B. sind bekannt und lassen sich durch radikalische Polymerisation, insbesondere durch Emulsions-, Suspensions-, Lösungs- oder Massepolymerisation herstellen. Die Polymerisate gemäß Komponente B besitzen vorzugsweise Molekulargewichte Mw (Gewichtsmittel, ermittelt durch Lichtstreuung oder Sedimentation) zwischen 15 000 und 200 000.

Die erfindungsgemäß geeigneten Phosphorverbindungen gemäß Komponente C. sind generell bekannt (siehe beispielsweise Ullmann, Enzyklopädie der technischen Chemie, Bd. 18, S. 301 ff, 1979; Houben-Weyl, Methoden der organischen Chemie, Bd. 12/1, S. 43, S. 136; Beilstein, Bd. 6, S. 177).

Gegebenenfalls halogenierte $C_1$-$C_8$-Alkylreste gemäß $R_1$, $R_2$ oder $R_3$ der Formel (I) sind beispielsweise Chlorethyl, 2-Chlorpropyl, 2,3-Dibrompropyl, Butyl, Methyl und Octyl.

Gegebenenfalls halogenierte $C_6$-$C_{20}$-Arylreste gemäß $R_1$, $R_2$ oder $R_3$ der Formel (I) sind beispielsweise Chlorphenyl, Bromphenyl, Pentachlorphenyl, Pentabromphenyl, Phenyl, Kresyl, Isopropylphenyl und Naphthyl.

Erfindungsgemäß einsetzbare Phosphorverbindungen gemäß Formel (I) sind beispielsweise Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri(isopropylphenyl)phosphat, halogensubstituierte Arylphosphate, Methanphosphonsäuredimethylester, Methanphosphonsäurediphenylester und Phenylphosphonsäurediethylester.

Die erfindungsgemäß geeigneten Tetrafluorethylenpolymerisate gemäß Komponente D. sind Polymere mit Fluorgehalten von 65-76 Gew.-%, vorzugsweise 70-76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer.

Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7-71 $kg/cm^3$ und bei Temperaturen von 0 bis 200 °C, vorzugsweise bei Temperaturen von 20 bis 100 °C (US-Patent 2 393 967).

Die Teilchengröße der erfindungsgemäßen Tetrafluorethylenpolymerisate liegt im Bereich von 0,05-20 σm und die Dichte im Bereich von 1,2-1,9 $g/cm^3$.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A. bis C. sowie einem Polytetrafluorethylen-Pulver her, das eine Teilchengröße und Dichte besitzt, die größer als der erfindungsgemäße Bereich sind, so werden zwar Formmassen hoher Flammwidrigkeit erhalten, Formkörper daraus haben aber manchmal eine mangelhafte Oberfläche, beispielsweise Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate D. mit Emulsionen der Pfropfpolymerisate E. eingesetzt werden.

Zur Herstellung einer entsprechenden Mischung wird zuerst eine wäßrige Emulsion (Latex) eines Pfropfpolymerisates E. mit mittleren Latexteilchengrößen von 0,1 bis 2 μm, insbesondere 0,2 bis 0,6 μm, mit einer feinteiligen Emulsion eines Tetrafluorethylenpolymerisates in Wasser mit mittleren Teilchengrößen von 0,05 bis 20 μm, insbesondere von 0,08 bis 10 μm vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate E. besitzen Feststoffgehalte von 25 bis 60 Gew.-%, insbesondere von 30 bis 45 Gew.-%.

In der Emulsionsmischung liegt das Gewichtsverhältnis Pfropfpolymerisat E. zum Tetrafluorethylenpolymerisat D. zwischen 95 : 5 und 60 : 40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150 °C, insbesondere von 50 bis 100 °C. Falls erforderlich, kann bei 50 bis 200 °C, bevorzugt 70 bis 100 °C getrocknet werden.

Geeignete Tetrafluorethylenpolymerisat-Emulsionen sind handelsübliche Produkte und werden beispielsweise von der Firma DuPont als Teflon® 30 N angeboten.

Zur Herstellung der Pfropfpolymerisate gemäß Komponente E. geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkende ethylenisch ungesättigte Monomere enthalten. Solche Vernetzer sind zum Beispiel Alkylendioldi(meth)-acrylate, Polyesterdi-(meth)-acrylate, Divinylbenzol, Tri-Vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzenden Dienkautschuk ais einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern enthalten. Andere geeignete Kautschuke sind zum Beispiel EPDM-Kautschuke, also Kautschuke aus Ethylen, Propylen und einem unkonjugierten Dienmonomer.

Bevorzugte Kautschuke zur Hertstellung der Pfropfpolymerisate E. sind Dien- und Alkylacrylatkautschuke.

Die Kautschuke liegen in den Pfropfpolymerisaten E. in Form wenigstens partiell vernetzter Teilchen einer mittleren Teilchengröße von 0,1 bis 2,0 µm, insbesondere 0,2 bis 0,6 µm vor.

Die Pfropfpolymerisate E. werden durch radikalische Pfropfcopolymerisation der eingangs definierten Monomerengemische aus E.1.1 und E.1.2 in Gegenwart der zu pfropfenden Kautschuke E.2 hergestellt und sind durchweg bekannt. Bevorzugte Herstellungsverfahren für die Pfropfpolymerisate E. sind Emulsions-, Lösungs-, Masse- oder Suspensionspolymerisation. Besonders bevorzugte Pfropfpolymerisate E. sind die sogenannten ABS-Polymerisate. Als kernsubstituiertes Styrol sei p-Methylstyrol und Chlorstyrol erwähnt.

Da der Einsatz der erfindungsgemäß zu verwendenden Pfropfpolymerisate E. durch Vorabmischung ihrer Emulsionen mit Emulsionen der Komponente D. erfolgt, ist die Herstellung der Komponente E. nach dem Verfahren der Emulsionspolymerisation am zweckmäßigsten.

Die erfindungsgemäßen thermoplastischen Formmassen können weitere für Polycarbonate oder für die thermoplastischen Polymerisate bekannte Zusätze wie Stabilisatoren, Pigmente, Fließmittel, Entformungsmittel und/oder Antistatika enthalten.

Die erfindungsgemäßen Formmassen, bestehend aus den Komponenten A., B., C., D. und E. und gegebenenfalls weiteren bekannten Zusätzen wie Stabilisatoren, Pigmenten, Fließmitteln, Entformungsmittel und/oder Antistatika werden hergestellt, indem man die jeweiligen Bestandteile in bekannter Weise vermischt und danach bei Temperaturen von 200 bis 330 °C in üblichen Aggregaten wie Innerknetern oder Ein- oder Zweischneckenextrudern schmelzcompoundiert oder schmelzextrudiert, oder indem man Lösungen der jeweiligen Komponenten in geeigneten organischen Lösungsmitteln, beispielsweise in Chlorbenzol, mischt und danach die Lösungsgemische in gebräuchlichen Eindampfaggregaten, beispielsweise in Eindampfextrudern, eindampft.

Gegenstand der vorliegenden Erfindung ist somit auch eine Verfahren zur Herstellung von thermoplastischen Formmassen, bestehend aus den Komponenten A., B., C., D. und E. sowie gegebenenfalls Stabilisatoren, Pigmenten, Fließmitteln, Entformungsmitteln und/oder Antistatika, das dadurch gekennzeichnet ist, daß man die Komponenten A., B., C., D. und E sowie gegebenenfalls Stabilisatoren, Pigmente, Fließmitteln, Entformungsmittel und/oder Antistatika in bekannter Weise vermischt und danach bei Temperaturen von 200 bis 330 °C in gebräuchlichen Aggregaten schmelzcompoundiert oder schmelzextrudiert oder daß man die Lösungen dieser Komponenten in geeigneten organischen Lösungsmitteln mischt und danach die Lösungsgemische in gebräuchlichen Eindampfaggregaten eindampft.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind : Gehäuseteile jeder Art (zum Beispiel für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften

besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-% u. Z. Polymere 250 (1972) 782-796.

Beispiele

Eingesetzte Legierungskomponenten

A.

Ein Copolycarbonat, bestehend aus Bisphenol A und 10 Gew.-% Tetrabrombisphenol A, berechnet auf Gesamtgewicht des Copolycarbonats, mit einer relativen Lösungsviskosität von 1,284, gemessen in $CH_2Cl_2$ bei 25 °C und einer Konzentration von 0,5 g/l ; Gehalt an Brom : ca. 5 Gew.-%.

B.

Styrol-Acrylnitril-Copolymerisat mit einem Styrol-Acrylnitril-Verhältnis von 72 : 28 und einer Grenzviskosität von $[\eta] = 0,55$ dl/g (Messung in Dimethylformamid bei 20 °C).

C.1

Triphenylphosphat

C.2

Diphenylkresylphosphat

D.1

Tetrafluorethylenpolymerisat als koagulierte Mischung aus einem SAN-Pfropfpolymerisat und einer Tetrafluorethylenpolymerisat-Emulsion in Wasser; Gehalt an Tetrafluorethylenpolymerisat in der Mischung: 10 Gew.-%, bezogen auf Mischung PTFE-SAN-Pfropfpolymerisat. Die Tetrafluorethylenpolymerisat-Emulsion besitzt einen Feststoffgehalt von 60 % ; die Teilchengröße liegt zwischen 0,05 und 0,5 µm. Die SAN-Pfropfpolymerisat-Emulsion besitzt einen Feststoffgehalt von 34 Gew.-% und hatte eine Latexteilchengröße von 0,3 bis 0,4 µm.

Herstellung von D.1 : Die Emulsion des Tetrafluorethylenpolymerisats wurde mit der Emulsion des SAN-Pfropfpolymerisat E vermischt und mit 1,8 Gew.-%, bezogen auf Polymerfeststoff, phenolischer Antioxidantien stabilisiert. Bei 85 bis 95 °C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Dieses Pulver kann dann mit den weiteren Komponenten in den beschriebenen Aggregaten compoundiert werden.

D2.

Tetrafluorethylenpolymerisat in Pulverform mit einer Teilchengröße von 500 bis 650 σm und einer Dichte von 2,18 bis 2,20 g/cm³ der Firma Hoechst (Hostaflon TF 2026).

E.

SAN-Pfropfpolymerisat von 50 Gew.-% Styrol-Acrylnitril-Gemisch (im Gew.-Verhältnis von 72 : 28) auf 50 Gew.-% teilchenförmiges Polybutadien mit einer mittleren Teilchengröße ($d_{50}$) von 0,3-0,4 σm, erhalten durch Emulsionspolymerisation.

Herstellung der erfindungsgemäßen Formmassen

Die Compoundierung der Komponenten A., B., C., D. und E. erfolgte auf einem Doppelwellenextruder (Werner und Pfleiderer) vom Typ ZSK 53 bei einer Temperatur von 230 °C.

Die Herstellung von Formkörpern erfolgte auf einer Spritzgußmaschine bei 260 °C.

Das Brandverhalten der Proben wurde nach UL-Subj. 94 V in Prüfkörperdicken von 1,6 mm und von 3.2 mm gemessen. Der UL-94-Test wird wie folgt durchgeführt :

Substanzproben werden zu Stäben der Abmessungen 127 × 12,7 × 1,6 mm und × 3.2 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 × $10^4$ kJ/m³ (1,000 BTU per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten

keine Proben, die länger als 10 s nach jeder Einwirkung der Testflamme brennen ; sie zeigen keine Gesamtflammzeit von mehr als 50 s bei der zweimaligen Flammeinwirkung auf jeden Probensatz ; sie enthalten keine Proben, die vollständig bis hinaus zu der am oberen Ende der Probe befestigten Halteklammer abbrennen ; sie weisen keine Proben auf, die die unterhalb der Probe angeordnete Watte durch brennende Tropfen oder Teilchen entzünden ; sie enthalten such keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt « nicht bestanden » und ist die Klassifizierung von Proben die eine Nachbrennzeit von ≥ 30 s aufweisen.

Die Beurteilung der Formkörperoberfläche in bezug auf Oberflächenstörungen wie Schlieren erfolgte visuell an Prüfkörpern der Abmessung 60 × 40 × 2 mm.

Die Bestimmung der Kerbschlagzähigkeit sowie der Schlagzähigkeit erfolgte in Anlehnung an DIN 53 453/ISO R 179 an Stäben der Abmessung 90 × 10 × 4 mm, wobei für die Kerbschlagzähigkeit die Stäbe mit einer V-förmigen Kerbe der Kerbtiefe 2,7 mm versehen wurden.

Aus der folgenden Tabelle können die genauen Zusammensetzungen der geprüften Formmassen sowie die erhaltenen Prüfdaten entnommen werden.

(Siehe Tabelle Seite 8 f.)

| | A (Gew.-Tl.) | B (Gew.-Tl.) | C1 (Gew.-Tl.) | C2 (Gew.-Tl.) | D1 (Gew.-Tl.) | D2 (Gew.-Tl.) | UL-94 V 3,2 mm | UL-94 V 1,6 mm | Kerbschlagzähigkeit (kJ/m²) | Schlagzähigkeit (kJ/m²) | Oberflächenbeschaffenheit |
|---|---|---|---|---|---|---|---|---|---|---|---|
| Vergleichsversuche | 75 | 25 | | | | | nb* | nb* | 6 | n.g.** | schlierenfrei |
| | 75 | 25 | 11,5 | | | 0,3 | | | | n.g. | Schlieren |
| erfindungsgemäße Versuche | 75 | 25 | 11,5 | | 3,5 | | VO | VO | 6 | n.g. | schlierenfrei |
| | 75 | 25 | | 11,5 | 3,5 | | VO | VO | 5 | n.g. | schlierenfrei |

* nicht bestanden
** nicht gebrochen

**Patentansprüche**

1. Thermoplastische Polycarbonatformmassen bestehend aus

A. 50 bis 90 Gew.-% eines halogenhaltigen Copolycarbonats aus einem zweiwertigen Phenol und einem zweiwertigen halogenierten, vorzugsweise bromierten Phenol, wobei das Copolycarbonat 3 bis 20 Gew.-% Halogen, insbesondere Brom, in Form von einkondensierten, halogenierten zweiwertigen Phenolen enthält,

B. 10 bis 50 Gew.-% eines thermoplastischen Polymerisats aus 50 bis 95 Gew.-Teilen Styrol, α-Methylstyrol, kernsubstituiertem Styrol oder Mischungen daraus und 5 bis 50 Gew.-% (Meth)Acrylnitril,

C. 1 bis 20 Gew.-Teilen, bezogen auf 100 Gew.-Teile Gesamtgewicht aus A. und B., einer Phosphorverbindung der Formel (I),

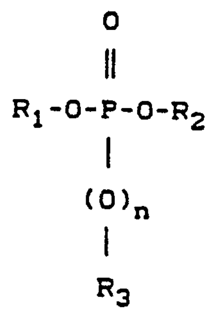

(I)

worin

$R_1$, $R_2$ und $R_3$ unabhängig voneinander ein gegebenenfalls halogensubstituiertes $C_1$-$C_8$-Alkyl oder ein gegebenenfalls alkyl- bzw. halogensubstituiertes $C_6$-$C_{20}$-Aryl sind und « n » für 0 oder 1 steht und

D. 0,05 bis 2,0 Gew.-Teilen, bezogen auf 100 Gew.-Teile Gesamtgewicht aus A. und B., eines Tetrafluorethylenpolymerisats mit mittleren Teilchengrößen von 0,05 bis 20 µm, mit Fluorgehalten von 65-76 Gew.-% und einer Dichte von 1,2 bis 1,9 g/cm$^3$, wobei die Komponente D. in Form einer koagulierten Mischung von Emulsionen der Tetrafluorethylenpolymerisate D. mit Emulsionen von maximal 3 Gew.-Teilen, mindestens jedoch 0,1 Gew.-Teilen, bezogen auf 100 Gew.-Teile der Summe der Komponenten A. + B., von Pfropfpolymerisaten E aus

E.1 5 bis 90 Gew.-Teilen einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile eines Kautschuks mit einer Glastemperatur $T_G \leq 10$ °C eingesetzt wird, und wobei das Gewichtsverhältnis Pfropfpolymerisat E. zum Tetrafluorethylenpolymerisat D. zwischen 95 : 5 und 60 : 40 liegt.

2. Formmassen gemäß Anspruch 1, dadurch gekennzeichnet, daß die Komponente C) in Mengen von 5 bis 15 Gew.-Teilen vorliegt.

3. Formmassen gemäß Ansprüche 1 und 2, dadurch gekennzeichnet, daß die Komponente D) in Mengen von 0,1 bis 1,0 Gew.-Teilen vorliegt.

4. Formmassen gemäß Ansprüchen 1 bis 3, dadurch gekennzeichnet, daß die Pfropfpolymerisate E) aus 30 bis 80 Gew.-Teilen einer Mischung aus E.1.1 und E.1.2 auf 70 bis 20 Gew.-Teile eines Kautschuks E.2 hergestellt sind.

5. Formmassen gemäß Ansprüche 1 bis 4, bestehend aus den Komponenten A., B., C., D. und E. und zusätzlich mindestens einem Zusatz, ausgewählt aus der Gruppe der Stabilisatoren, Pigmente, Fließmittel, Entformungsmittel und Antistatika.

6. Verfahren zur Herstellung der Formmassen der Ansprüche 1 bis 4, dadurch gekennzeichnet, daß man die Komponenten A., B., C., D. und E. in bekannter Weise vermischt und danach bei Temperaturen von 200 °C bis 330 °C in gebräuchlichen Aggregaten schmelzcompoundiert oder schmelzextrudiert.

7. Verfahren zur Herstellung der Formmassen nach den Ansprüchen 1 bis 4, dadurch gekennzeichnet, daß man Lösungen der Komponenten A., B., C., D. und E. in geeigneten organischen Lösungsmitteln mischt und danach die Lösungsgemische in gebräuchlichen Eindampfaggregaten eindampft.

8. Verfahren zur Herstellung der Formmassen des Anspruchs 5 gemäß Ansprüche 6 und 7, dadurch gekennzeichnet, daß man mindestens einen Zusatz, ausgewählt aus der Gruppe der Stabilisatoren, Pigmente, Fließmittel, Entformungsmittel und Antistatika einbezieht.

**Claims**

1. Thermoplastic polycarbonate moulding compounds consisting of

A. 50 to 90 % by weight of a halogen-containing copolycarbonate of a dihydric phenol and a dihydric, halogenated, preferably brominated, phenol, the copolycarbonate containing 3 to 20 % by weight halogen, more especially bromine, in the form of co-condensed, halogenated dihydric phenols,

B. 10 to 50 % by weight of a thermoplastic polymer of 50 to 95 parts by weight styrene, α-methyl styrene, nucleus-substituted styrene or mixtures thereof and 5 to 50 % by weight (meth)acrylonitrile,

C. 1 to 20 parts by weight, based on 100 parts by weight total weight of A. and B., of a phosphorus compound corresponding to formula (I)

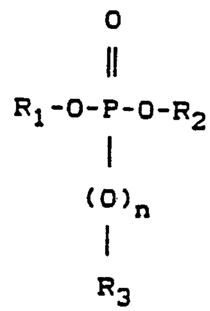

(I)

in which
$R_1$, $R_2$ and $R_3$ independently of one another represent an optionally halogen-substituted $C_1$-$C_8$ alkyl or an optionally alkyl- or halogensubstituted $C_6$-$C_{20}$ aryl and « n » is 0 or 1 and

D. 0.05 to 2.0 parts by weight, based on 100 parts by weight total weight of A. and B., of a tetrafluoroethylene polymer having mean particle sizes of 0.05 to 20 μm, fluorine contents of 65 to 76 % by weight and a density of 1.2 to 1.9 g/cm³, component D. being used in the form of a coagulated mixture of emulsions of the tetrafluoroethylene polymers D. with emulsions of at most 3 parts by weight, but at least 0.1 part by weight, based on 100 parts by weight of the sum of components A. + B., of graft polymers E of

E.1 50 to 95 % by weight styrene, α-methyl styrene, nucleus-substituted styrene, methyl methacrylate or mixtures thereof and

E.1.2 50 to 5 % by weight (meth)acrylonitrile, methyl methacrylate, maleic anhydride, N-substituted maleic imide or mixtures thereof on

E.2 95 to 10 parts by weight of a rubber having a glass temperature $T_G$ of $\leq 10$ °C, the ratio by weight of graft polymer E. to the tetrafluoroethylene polymer D. being between 95 : 5 and 60 : 40.

2. Moulding compounds as claimed in claim 1, characterized in that component C) is present in quantities of 5 to 15 parts by weight.

3. Moulding compounds as claimed in claims 1 and 2, characterized in that component D) is present in quantities of 0.1 to 1.0 parts by weight.

4. Moulding compounds as claimed in claims 1 to 3, characterized in that the graft polymers E) are prepared from 30 to 80 parts by weight of a mixture of E.1.1 and E.1.2 on 70 to 20 parts by weight of a rubber E.2.

5. Moulding compounds as claimed in claims 1 to 4 consisting of components A., B., C., D. and E. and, in addition, at least one additive selected from the group consisting of stabilizers, pigments, flow aids, mould release agents and antistatic agents.

6. A process for the production of the moulding compounds claimed in claims 1 to 4, characterized in that components A., B., C., D. and E. are mixed in known manner and then melt-compounded or melt-extruded in standard units at temperatures of 200 °C to 330 °C.

7. A process for the production of the moulding compounds claimed in claims 1 to 4, characterized in that solutions of components A., B., C., D. and E. in organic solvents are mixed and the mixed solutions are then concentrated by evaporation in standard evaporation units.

8. A process as claimed in claims 6 and 7 for the production of the moulding compounds claimed in claim 5, characterized in that at least one additive selected from the group consisting of stabilizers, pigments, flow aids, mould release agents and antistatic agents is incorporated.

**Revendications**

1. Matières à mouler thermoplastiques à base de polycarbonates, consistant en

A. 50 à 90 % en poids d'un copolycarbonate contenant un halogène, dérivant d'un phénol divalent et d'un phénol divalent halogéné, de préférence bromé, le copolycarbonate contenant de 3 à 20 % en poids d'un halogène, plus spécialement de brome, sous la forme de phénols divalents halogénés condensés,

B. 10 à 50 % en poids d'un polymère thermoplastique de 50 à 95 parties en poids de styrène, d'α-méthylstyrène, de styrène substitué dans le noyau ou de mélanges de ces composants, et de 5 à 50 % en poids de (méth)acrylonitrile,

C. 1 à 20 parties en poids, pour 100 parties en poids du mélange total A. et B., d'un composé du phosphore répondant à la formule (I),

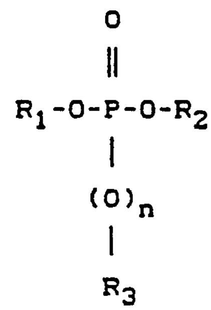

(I)

dans laquelle

$R_1$, $R_2$ et $R_3$ représentent chacun, indépendamment les uns des autres, un groupe alkyle en $C_1$-$C_8$ éventuellement substitué par des halogènes ou un groupe aryle en $C_6$-$C_{20}$ éventuellement substitué par des groupes alkyles ou des halogènes, et n est égal à 0 ou 1, et

D. 0,05 à 2,0 parties en poids, pour 100 parties en poids du mélange total de A. et B., d'un polymère du tétrafluoréthylène à des dimensions de particules moyennes de 0,05 à 20 μm, avec des teneurs en fluor de 65 à 76 % en poids, et une densité de 1,2 à 1,9 g/cm³, le composant D. étant mis en œuvre sous la forme d'un mélange coagulé d'émulsions des polymères du tétrafluoréthylène D. avec des émulsions de trois parties en poids au maximum mais de 0,1 partie en poids au minimum, pour 100 parties en poids de la somme des composants A. + B., de polymères greffés E. consistant en

E.1 5 à 90 parties en poids d'un mélange de

E.1.1 50 à 95 % en poids de styrène, d'α-méthylstyrène, de styrène substitué dans le noyau, de méthacrylate de méthyle ou de mélanges de ces composants, et

E.1.2 50 à 5 % en poids de (méth)acrylonitrile, de méthacrylate de méthyle, d'anhydride maléique, de maléimide substitué sur l'azote ou de mélanges de ces composants, sur

E.2 95 à 10 parties en poids d'un caoutchouc ayant une température de transition du second ordre $T_G \leq 10$ °C, et les proportions relatives en poids entre le polymère greffé E. et le polymère du tétrafluoréthylène D. se situant entre 95 : 5 et 60 : 40.

2. Matières à mouler selon la revendication 1, caractérisées en ce que le composant C. est présent en quantité de 5 à 15 parties en poids.

3. Matières à mouler selon les revendications 1 et 2, caractérisées en ce que le composant D. est présent en quantité de 0,1 à 1,0 partie en poids.

4. Matières à mouler selon les revendications 1 à 3, caractérisées en ce que les polymères greffés E. sont préparés à partir de 30 à 80 parties en poids d'un mélange de E.1.1 et E.1.2 sur 70 à 20 parties en poids d'un caoutchouc E.2.

5. Matières à mouler selon les revendications 1 à 4, consistant en les composants A., B., C., D. et E. et en outre au moins un additif choisi dans le groupe des stabilisants, des pigments, des agents fluidifiants, des agents de démoulage et des agents antistatiques.

6. Procédé de préparation des matières à mouler des revendications 1 à 4, caractérisé en ce que l'on mélange de manière connue les composants A., B., C., D. et E. puis on les soumet à mélange à l'état fondu ou extrusion à l'état fondu à des températures de 200 à 330 °C dans des appareils usuels.

7. Procédé de préparation des matières à mouler des revendications 1 à 4, caractérisé en ce que l'on mélange des solutions des composants A., B., C., D. et E. dans des solvants organiques appropriés puis on évapore les mélanges en solution dans des appareils d'évaporation usuels.

8. Procédé de préparation des matières à mouler de la revendication 5, selon les revendications 6 et 7, caractérisé en ce que l'on utilise au moins un additif choisi dans le groupe formé par les stabilisants, les pigments, les agents fluidifiants, les agents de démoulage et les agents antistatiques.